# EUROPÄISCHE PATENTANMELDUNG

(11) **EP 2 543 943 A1**
(43) Veröffentlichungstag der Anmeldung: **09.01.2013**
(21) Anmeldenummer: 11005510.0
(22) Anmeldetag: 06.07.2011
(51) Int. Cl.: F25D 23/08, F25D 23/06

(54) **Kühlgerät**

(71) Anmelder: Forster Küchen- & Kühltechnik AG, 9300 Arbon (CH)
(72) Erfinder: Oechsle, Hans-Peter, A 6830 Rankweil (CH)
(74) Vertreter: Luchs, Willi

(57) **Zusammenfassung**

Ein Kühlgerät ist mit einem Gehäuse (2) und einem darin angeordneten Innenbehälter (1) sowie einen im letzteren angeordneten Verdampfer (3) und einem Kompressor (4) versehen. Der Verdampfer (3) steht über eine Rohrleitung (5) mit dem Kompressor (4) in Verbindung und zwischen dem Innenbehälter (1) und dem Gehäuse (2) ist ein Zwischenraum (6) vorhanden. In diesem Zwischenraum (6) ist eine Dichthülse (7) angeordnet, durch welche die Rohrleitung (5) zur Verbindung des Verdampfers (3) mit dem Kompressor (4) geführt ist, wobei die Dichthülse (7) die Rohrleitung (5) dicht umschliesst. Dadurch wird verhindert, dass Kälte aus dem Innenbehälter durch die Durchgangsbohrung nach aussen gelangen kann. Durch diese Massnahme kann die Energieeffizienz des Kühlgeräts verbessert werden.

## Beschreibung

Die Erfindung betrifft ein Kühlgerät nach dem Oberbegriff des Anspruchs 1 sowie ein Verfahren zur Montage eines solchen Kühlgerätes.

Aus dem Stand der Technik sind Kompressorkühlgeräte bekannt, bei denen ein zunächst gasförmiges Kältemittel durch einen Kompressor verdichtet wird, wodurch sich das Kältemittel erwärmt. Das erwärmte Kältemittel wird anschliessend in einem Verflüssiger, der Kühlschlangen enthält, welche an der Rückseite des Kühlgeräts angebracht sind, kondensiert, indem die Wärme an die Umgebung abgegeben wird. Danach strömt das Kältemittel zur Druckminderung durch eine Drossel, welche beispielsweise durch ein Expansionsventil oder ein Kapillarrohr gebildet sein kann, und anschliessend weiter in einen Verdampfer, der im Inneren des Kühlgeräts angeordnet ist. Dort entnimmt das verdampfende Kältemittel aus den Kühlfächern des Kühlgeräts die notwendige Verdampfungswärme und strömt schliesslich als Gas weiter zum ausserhalb des Kühlgeräts angeordneten Kompressor.

Die bekannten Kompressionskühlgeräte umfassen in der Regel ein mit einer Türe verschliessbares äusseres Gehäuse und einen darin angeordneten, einseitig zur Türe hin offenen Innenbehälter. Zwischen der Wandung des Innenbehälters und des äusseren Gehäuses ist ein Zwischenraum vorhanden, welcher zur Isolierung mit einem wärmeisolierenden Füllmittel, beispielsweise einem geschäumten Kunststoffmaterial, befüllt wird. Der Verdampfer ist innerhalb des Innenbehälters und der Kompressor ist ausserhalb des äusseren Gehäuses angeordnet. Der Verdampfer und der Kompressor sind über eine Rohrleitung, beispielsweise ein Kupferrohr, miteinander verbunden, in welcher das Kältemittel zirkulieren kann. Die Rohrleitung zur Verbindung des Verdampfers mit dem Kompressor wird dabei durch Durchgangsbohrungen in der Wandung des Innenbehälters und des äusseren Gehäuses geführt.

Die Durchführung der Rohrleitung durch diese Durchgangsbohrungen führt zu Energieverlusten, weil Kälte aus dem Innenbehälter durch diese Durchgangsbohrungen nach aussen entweichen kann.

Davon ausgehend liegt der Erfindung die Aufgabe zugrunde, ein gattungsgemässes Kühlgerät energieeffizienter auszugestalten. Weiterhin soll eine möglichst einfache und kostengünstige Montage des Kühlgeräts gewährleistet werden.

Diese Aufgaben werden mit einem Kühlgerät mit den Merkmalen des Anspruchs 1 sowie mit einem Verfahren zur Montage eines solchen Kühlgeräts gemäss Anspruch 11 gelöst.

Bevorzugte Ausführungsformen des erfindungsgemässen Kühlgerätes sind den abhängigen Ansprüchen 2 bis 10 zu entnehmen.

Bei dem erfindungsgemässen Kühlgerät, welches als Kühlschrank oder als Gefrierschrank verwendet werden kann, ist ein äusseres Gehäuse und ein darin angeordneter Innenbehälter vorgesehen. Im Innenbehälter ist ein Verdampfer angeordnet. Ausserhalb des Gehäuses ist ein Kompressor angeordnet, der über eine Rohrleitung mit dem Verdampfer in Verbindung steht. Im Zwischenraum zwischen dem äusseren Gehäuse und dem Innenbehälter ist eine Dichthülse angeordnet, durch welche die Rohrleitung zur Verbindung des Verdampfers mit dem Kompressor geführt ist, wobei die Dichthülse die Rohrleitung dicht umschliesst. Dadurch wird verhindert, dass Kälte aus dem Innenbehälter durch die Durchgangsbohrung, in welcher die Dichthülse angeordnet ist, nach aussen gelangen kann. Durch diese Massnahme kann die Energieeffizienz des Kühlgeräts verbessert werden.

Zur Vermeidung von Kälteverlusten ist der Zwischenraum zwischen dem äusseren Gehäuse und dem Innenbehälter mit einem Füllmittel, insbesondere einem Kunststoff-Hartschaum, ausgeschäumt. Die Dichthülse umfasst zweckmässig ein rohrförmiges Verbindungsstück, welches sich von einer Durchgangsöffnung im Innenbehälter bis zu einer Durchgangsöffnung im äusseren Gehäuse erstreckt und eine erste stirnseitige Öffnung, welche dem Innenbehälter zugewandt ist, sowie eine zweite stirnseitige Öffnung, welche der Aussenseite des Gehäuses zugewandt ist, aufweist. In der ersten stirnseitigen Öffnung des rohrförmigen Verbindungsstücks ist zweckmässig ein trichterförmiges Dichtelement aus einem Gummimaterial angeordnet. Dieses Dichtelement umschliesst den Aussenumfang der Rohrleitung vollständig und formschlüssig, um zu verhindern, dass kalte Luft aus dem Innenbehälter durch die Durchgangsöffnungen im Innenbehälter und im äusseren Gehäuse ausströmen kann.

Bevorzugt ist das Dichtelement als trichterförmiger Stopfen ausgebildet und weist einen konischen Aussenumfang auf, welcher in der ersten stirnseitigen Öffnung des Verbindungsstücks fluiddicht befestigt ist. Das Dichtelement weist eine zentrale Bohrung auf, durch welche die Rohrleitung durchgeführt wird.

Die Dichtigkeit dieser Anordnung kann weiterhin dadurch erhöht werden, dass in der zweiten stirnseitigen Öffnung des Verbindungsstücks eine die Rohrleitung umgebende Isolierung eingreift und dort fluiddicht eingepresst wird.

Zur Befestigung des rohrförmigen Verbindungsstücks an der Innenwandung des äusseren Gehäuses und an der Aussenwandung des Innenbehälters sind Befestigungsflansche am Verbindungsstück vorgesehen. Das erfindungsgemässe Kühlgerät wird nach dem erfindungsgemässen Verfahren montiert, indem zunächst der Innenbehälter in das äussere Gehäuse eingesetzt wird, wobei zwischen dem Innenbehälter und dem Gehäuse der Zwischenraum entsteht, in welchem anschliessend die Dichthülse angeordnet wird, um eine Verbindung zwischen einer Durchgangsöffnung in dem Innenbehälter und einer Durchgangsöffnung in dem äusseren Gehäuse zu erzeugen. Danach wird der Zwischenraum mit einem geschäumten Füllmittel ausgeschäumt.

Diese und weitere Vorteile gehen aus dem nachfolgend unter Bezugnahme auf die begleitenden Zeichnungen näher beschriebenen Ausführungsbeispiel hervor. Es zeigt:
- Fig. 1: perspektivischer Teilschnitt eines erfindungsgemässen Kühlschranks mit einem Gehäuse; und
- Fig. 2: perspektivisch dargestellter Teilschnitt des Kühlschrankes sowie der Dichthülse darin, durch welche die Rohrleitung von Fig. 1 durchgeführt wird.

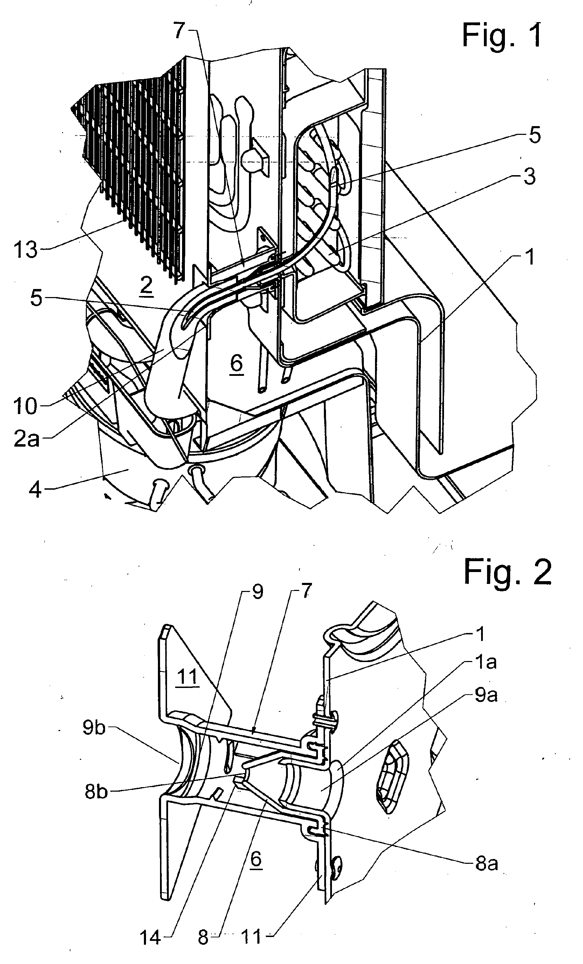

Der in Fig. 1 schematisch dargestellte Kühlschrank enthält ein äusseres Gehäuse 2, welches an seiner Frontseite mit einer zu öffnenden Türe verschlossen ist. Innerhalb des äusseren Gehäuses 2 ist ein zur Frontseite hin einseitig offener Innenbehälter 1 angeordnet. Der Innenraum des Innenbehälters dient zur Aufbewahrung von Kühlgut, welches durch Öffnen der Türe in den Innenraum des Innenbehälters gebracht oder entnommen werden kann. Zwischen der Aussenwandung des Innenbehälters 1 und der Innenwandung des Gehäuses 2 ist ein Zwischenraum 6 ausgebildet, welcher zur thermischen Isolierung des Innenbehälters gegenüber der Umgebung mit einem Füllmittel, beispielsweise einem Kunststoff-Hartschaum, ausgeschäumt ist. Das Füllmittel ist aus Gründen der besseren Darstellung nicht gezeigt.

Der Kühlschrank weist einen Kühlkreislauf mit einem Kompressor 4, einen Verflüssiger, eine Drossel und einen Verdampfer 3 sowie eine Rohrleitung, in dem ein Kühlmittel zirkuliert, auf. Das in dem Kühlkreislauf innerhalb der Rohrleitung zirkulierende Kühlmittel wird von dem Kompressor verdichtet und dabei erwärmt, in dem Verflüssiger, der an der Rückseite des Kühlschranks angeordnete Kühlschlangen 13 umfasst, kondensiert und anschliessend durch die Drossel geführt, wo das Kühlmittel expandiert, und schliesslich zum Verdampfer 3 geleitet. Im Verdampfer 3 entnimmt das verdampfende Kältemittel aus dem Innenraum des Innenbehälters 1 die notwendige Verdampfungswärme und strömt schliesslich gasförmig weiter zum aussen liegenden Kompressor 4. Der Verdampfer 3 und der Kompressor 4 sind hierfür durch eine Rohrleitung 5 miteinander verbunden.

Zur Durchführung der Rohrleitung 5 aus dem Innenraum des Innenbehälters 1 zu dem ausserhalb des Gehäuses 1 angeordneten Kompressor 4 Durchgangsbohrungen 1a bzw. 2a in der Wandung des Innenbehälters 1 und der Wandung des Gehäuses 2 vorgesehen. Zwischen der Durchgangsöffnung 1a in der Wandung des Innenbehälters 1 und der Durchgangsöffnung 2a in der Wandung des Gehäuses 2 erstreckt sich im Zwischenraum 6 eine Dichthülse 7, durch weiche die Rohrleitung 5 geführt ist. Die Dichthülse 7 umfasst ein rohrförmiges Verbindungsstück 9, welches eine erste stirnseitige Öffnung 9a aufweist, die dem Innenbehälter zugewandt ist sowie eine zweite stirnseitige Öffnung 9b, welche der Aussenseite des Gehäuses zugewandt ist. In der ersten stirnseitigen Öffnung 9a des Verbindungsstücks 9 ist ein Dichtelement 8 aus einem Gummimaterial angeordnet.

Bei dem Dichtelement 8 handelt es sich zweckmässig um einen trichterförmigen Stopfen mit einem konischen Aussenumfang an seinem dem Gehäuse 1 zugewandten Ende. Das Dichtelement 8 ist an seinem dem Innenbehälter 1 zugewandten Ende mittels einem an seinem äusseren Umfang umlaufenden Halteflansch 8a, der in eine korrespondierende Aufnahmeöffnung an der vorderen Stirnseite des Verbindungsstücks 9 eingreift, formschlüssig befestigt. Das Dichtelement 8 weist eine zentrale Bohrung 8b auf, durch welche die Rohrleitung 5 durchgeführt wird. Das vordere, trichterförmige Ende des Dichtelements 8 umschliesst dabei die Rohrleitung 5 vollständig und fluiddicht.

Zur Befestigung des rohrförmigen Verbindungsstücks 9 an der Aussenseite des Innenbehälters 1 und der Innenwandung des Gehäuses 2 sind an den stirnseitigen Enden des Verbindungsstücks 9 Befestigungsflansche 11 vorgesehen, welche mit der Wandung des Innenbehälters und des Gehäuses verschraubt oder vernietet sind.

In dem ausserhalb des Gehäuses 1 verlaufenden Bereich ist die Rohrleitung 5 durch eine Isolierung 10 wärmeisoliert. Bei der Isolierung 10 kann es sich beispielsweise um einen Isolierschlauch aus einem geschäumten Kunststoff handeln, der über die Rohrleitung 5 gestülpt ist. Die Isolierung 10 ist zweckmässig in die zweite stirnseitige Öffnung 9b des Verbindungsstücks 9 geschoben. Der äussere Durchmesser der Isolierung 10 ist hierfür zweckmässig etwas grösser als der Innendurchmesser der zweiten stirnseitigen Öffnung 9b, so dass die weiche Isolierung 10 in die zweite stirnseitige Öffnung 9a des Verbindungsstücks 9 durch Zusammendrücken des weichen Isoliermaterials der Isolierung 10 eingepresst werden kann. Innerhalb des Verbindungsstücks 9 ist zweckmässig ein Absatz 14 vorgesehen, an dem das stirnseitige Ende der Isolierung 10 anliegt (Fig. 2).

Zur Montage des erfindungsgemässen Kühlgeräts wird zunächst der Innenbehälter 1 in das äussere Gehäuse 2 eingesetzt, wobei zwischen der Aussenseite des Innenbehälters 1 und der Innenwandung des Gehäuses 2 ein Zwischenraum 6 entsteht. Danach wird die Dichthülse 7 in dem Zwischenraum 6 zur Herstellung einer Verbindung zwischen der Durchgangsöffnung 1a in dem Innenbehälter und der Durchgangsöffnung 2a in dem Gehäuse 2 angeordnet. Zweckmässig ist hierbei die Dichthülse 7 bereits vor dem Einsetzen des Innenbehälters 1 in das Gehäuse 2 an der Aussenseite der Wandung des Innenbehälters 1 befestigt. Das rohrförmige Verbindungsstück 9 der Dichthülse 7 muss dann nur noch mittels des Befestigungsflansches 11 an der Innenwandung des äusseren Gehäuses befestigt werden. Danach wird der Zwischenraum 6 mit einem Füllmittel, insbesondere einem Kunststoff-Hartschaum, ausgeschäumt, wobei auch die Aussenseite des rohrförmigen Verbindungsstücks 9 umschäumt und dadurch zusätzlich im Zwischenraum 6 fixiert wird. Schliesslich wird der Verdampfer 3 mit der daran befestigten Rohrleitung 5 in den Innenbehälter 1 eingebaut und die Rohrleitung 5 wird durch die Dichthülse 7 nach aussen geführt. Die Rohrleitung ist dabei aus Dichtigkeitsgründen am Verdampfer 3 unlösbar befestigt und ausserhalb des Verdampfers nicht gebogen. Über das aus der Dichthülse 7 herausragende freie Ende der Rohrleitung 5 wird die schlauchförmige Isolierung 10 aufgestülpt. Danach kann die Rohrleitung 5 den geometrischen Verhältnissen angepasst gebogen und schliesslich an dem Kompressor 4 angeschlossen werden.

## Patentansprüche

1. Kühlgerät mit einem Gehäuse (2) und einem darin angeordneten Innenbehälter (1) sowie einen im Innenbehälter (1) angeordneten Verdampfer (3) und einem ausserhalb des Gehäuses (2) angeordneten Kompressor (4), wobei der Verdampfer (3) über eine Rohrleitung (5) mit dem Kompressor (4) in Verbindung steht und zwischen dem Innenbehälter (1) und dem Gehäuse (2) ein Zwischenraum (6) vorhanden ist, **dadurch gekennzeichnet, dass**
im Zwischenraum (6) eine Dichthülse (7) angeordnet ist, durch welche die Rohrleitung (5) zur Verbindung des Verdampfers (3) mit dem Kompressor (4) geführt ist, wobei die Dichthülse (7) die Rohrleitung (5) dicht umschliesst.

2. Kühlgerät nach Anspruch 1, **dadurch gekennzeichnet, dass** der Zwischenraum (6) mit einem geschäumten Füllmittel, insbesondere einem Kunststoff-Hartschaum, ausgeschäumt ist.

3. Kühlgerät nach einem der voranstehenden Ansprüche, **dadurch gekennzeichnet, dass** die Dichthülse (6) ein trichterförmiges Dichtelement (8) enthält, welches den Aussenumfang der Rohrleitung vollständig umschliesst.

4. Kühlgerät nach Anspruch 3, **dadurch gekennzeichnet, dass** das Dichtelement (8) aus einem Gummimaterial ist.

5. Kühlgerät nach Anspruch 3 oder 4, **dadurch gekennzeichnet, dass** die Dichthülse ein rohrförmiges Verbindungsstück (9) enthält, welches sich von einer Durchgangsöffnung (1a) im Innenbehälter (1) bis zu einer Durchgangsöffnung (2a) im Gehäuse (2) erstreckt und eine erste stirnseitige Öffnung (9a), welche dem Innenbehälter (1) zugewandt ist sowie eine zweite stirnseitige Öffnung (9b), welche der Aussenseite des Gehäuses (2) zugewandt ist, aufweist.

6. Kühlgerät nach Anspruch 5, **dadurch gekennzeichnet, dass** das Dichtelement (8) in der stirnseitigen Öffnung (9a) des Verbindungsstücks (9), welches dem Innenbehälter (1) zugewandt ist, abdichtend befestigt ist.

7. Kühlgerät nach einem der Ansprüche 5 oder 6, **dadurch gekennzeichnet, dass** das Dichtelement (8) als trichterförmiger Stopfen ausgebildet ist mit einem konischen Aussenumfang, der in der ersten strirnseitigen Öffnung (9a) des Verbindungsstücks (9) formschlüssig befestigt ist.

8. Kühlgerät nach einem der Ansprüche 3 bis 7, **dadurch gekennzeichnet, dass** das Dichtelement (8) eine zentrale Bohrung aufweist, durch welche die Rohrleitung (5) durchgeführt wird.

9. Kühlgerät nach einem der Ansprüche 5 bis 8, **dadurch gekennzeichnet, dass** in die zweite stirnseitige Öffnung (9b) des Verbindungsstücks (9) eine die Rohrleitung (5) umgebende Isolierung (10) eingreift.

10. Kühlgerät nach einem der Ansprüche 5 bis 9, **dadurch gekennzeichnet, dass** das rohrförmige Verbindungsstück (9) Befestigungsflansche (11) zur Befestigung am Gehäuse (2) und/oder am Innenbehälter (1) aufweist.

11. Verfahren zur Montage eines Kühlgeräts nach einem der voranstehenden Ansprüche mit folgenden Schritten:
- Einsetzen des Innenbehälters (1) in das Gehäuse (2), wobei ein Zwischenraum (6) zwischen dem Innenbehälter und dem Gehäuse entsteht,
- Anordnen der Dichthülse (7) in dem Zwischenraum (6) zur Herstellung einer Verbindung zwischen einer Durchgangsöffnung (1a) in dem Innenbehälter (1) und einer Durchgangsöffnung (2a) in dem Gehäuse (2);
- Ausschäumen des Zwischenraums (6) mit einem geschäumten Füllmittel;
- Einbau des Verdampfers (3) mit der daran befestigten Rohrleitung (5) in den Innenbehälter (1) und Durchführung der Rohrleitung (5) durch die Dichthülse (7);
- Verbinden des freien Endes der Rohrleitung (5) mit dem Kompressor (4).

12. Verfahren nach Anspruch 11, **dadurch gekennzeichnet, dass** vor dem Verbinden der Rohrleitung (5) mit dem Kompressor (4) von dem freien Ende der Rohrleitung (5) bis zur Dichthülse (6) eine Isolierung (10) aufgestülpt wird.
